# EUROPEAN PATENT APPLICATION

(11) **EP 3 876 218 A1**
(43) Date of publication of application: **08.09.2021**
(21) Application number: 19878343.3
(22) Date of filing: 30.10.2019
(51) Int. Cl.: G09B 9/00, G09B 23/28, A61B 17/94

(54) **MEDICAL SIMULATOR**

(30) Priority: 31.10.2018 JP 2018204819
(71) Applicant: Micoto Technology Inc., Yonago-shi, Tottori 683-0845 (JP); National University Corporation Tottori University, Tottori-shi, Tottori 680-8550 (JP)
(72) Inventor: SHIMODA, Tomohiro, Yonago-shi, Tottori 683-0845 (JP); MATSUOKA, Masaaki, Yonago-shi, Tottori 683-0845 (JP); HIYAMA Yasuaki, Yonago-shi, Tottori 683-0845 (JP); YOSHIDA Masahiko, Yonago-shi, Tottori 683-0845 (JP); OTA, Ren, Yonago-shi, Tottori 683-0845 (JP); UEKI, Masaru, Yonago-shi, Tottori 683-8503 (JP); UEHARA Kazutake, Yonago-shi, Tottori 683-8504 (JP); FUJII, Masashi, Yonago-shi, Tottori 683-8504 (JP)
(74) Representative: Weickmann, Hans
(86) International application number: PCT/JP2019/042700
(87) International publication number: WO 2020/090945

(57) **Abstract**

A medical simulator includes: a luminal organ model having flexibility and having a shape that simulates at least one luminal organ, the luminal organ model including a constricted wall portion having a lumen cross-sectional area smaller than the lumen cross-sectional area of a periphery of the constricted wall portion, the constricted wall portion being provided in a first specific region including a portion corresponding to one end portion of one luminal organ or corresponding to a joining portion of two luminal organs; a first space formation portion that circumferentially covers at least an outer periphery of the first specific region of the luminal organ model to form a first sealed space at the outer periphery of the first specific region; and a fluid controller that controls a fluid pressure of a to-be-controlled fluid within the first sealed space to expand or contract the lumen cross-sectional area of the constricted wall portion of the luminal organ mode.

## Description

### TECHNICAL FIELD

The present invention relates to medical simulators, and in particular, to a simulator that allows training of an endoscopic procedure.

### BACKGROUND ART

In recent years, medicine has been advancing and medical techniques are getting more sophisticated. This leads to an increasing demand for medical practitioners to have advanced skills. There is a need for enhanced education for the medical practitioners. In particular, simulation-based education, which employs a model that simulates a living body, has been receiving much attention because this makes it possible to acquire skills and get training of skills that are close to actual practices.

Patent Document 1 described below discloses a training model for endoscopy and endoscopic therapy of a luminal organ. This training model includes: a chamber that accommodates a luminal organ; an inlet fastened in a chamber wall of the chamber with a coupling device that is coupled to the luminal organ; a connecting portion that allows connection with a suction pump used to generate a negative pressure in the chamber; and a molding in the chamber including a cavity in which the luminal organ can be inserted and that is adapted to an external shape of the luminal organ. This model is configured such that an endoscope can be introduced into the luminal organ from the inlet, a support device (elastic rubber diaphragm) provided at the inlet supports the endoscope inserted into the opening portion, and the suction pump causes a negative pressure within the chamber to expand the luminal organ.

### RELATED ART DOCUMENT

### PATENT DOCUMENT

Patent Document 1: Japanese Patent Application (Translation of PCT Application) Laid-open No. 2009-519476

### SUMMARY OF THE INVENTION

### PROBLEM TO BE SOLVED BY THE INVENTION

Although the model described above supports the endoscope with the support device, which is an elastic rubber diaphragm, it does not deform before and after the insertion of the endoscope. Thus, it cannot be said that this model is able to reproduce behavior of an actual living body.

For example, in an actual living body, a cardia portion, that is a joining portion between the esophagus and the stomach, involves open-close behavior such that the cardia portion closes with breathing in and opens resulting from relaxing.

Moreover, an oral endoscope and a nasal endoscope differ by approximately two times in terms of the diameter of an insertion portion to be inserted into the internal body. Thus, with the model described above, it is not possible to achieve training of a procedure involving both types of endoscope.

The present invention has been made in view of the situations described above, and provides a medical simulator that allows highly precise training in practice with respect to an endoscopic procedure such as endoscopy or endoscopic therapy.

### MEANS FOR SOLVING THE PROBLEM

A medical simulator according to one aspect of the present invention employs the following configuration in order to solve the problem described above. The medical simulator according to the one aspect includes: a luminal organ model having flexibility and having a shape that simulates at least one luminal organ, the luminal organ model including a constricted wall portion having a lumen cross-sectional area smaller than the lumen cross-sectional area of a periphery of the constricted wall portion, the constricted wall portion being provided in a first specific region of the luminal organ model, the first specific region including a portion corresponding to one end portion of one luminal organ or corresponding to a joining portion of two luminal organs; a first space formation portion that circumferentially covers at least an outer periphery of the first specific region of the luminal organ model to form a first sealed space at the outer periphery of the first specific region; and a fluid controller that controls a fluid pressure of a to-be-controlled fluid within the first sealed space to expand or contract the lumen cross-sectional area of the constricted wall portion of the luminal organ model.

Here, the lumen cross-sectional area of the luminal organ model means an area of a luminal cross-section, which is perpendicular to a direction in which food flows through a lumen of the luminal organ model, or the longitudinal direction of the luminal organ model, or the axial direction of the luminal organ model.

In addition, the lumen of the luminal organ model means a cavity on the inner side of the luminal organ model having a tubular shape or bag-like shape of which inner side forms the cavity.

### EFFECT OF THE INVENTION

According to the present invention, it is possible to provide a medical simulator that allows highly precise training in practice with respect to an endoscopic procedure such as endoscopy or endoscopic therapy.

### BRIEF DESCRIPTION OF THE DRAWINGS

Fig. 1 is a diagram illustrating an external appearance of a medical simulator according to the present exemplary embodiment;
Fig. 2 is a perspective view illustrating an in-body forming portion as viewed from below;
Fig. 3 is a diagram illustrating a main structure of an upper gastrointestinal tract model and its surroundings;
Fig. 4 is a diagram illustrating a main structure of an organ accommodating portion;
Fig. 5 is a diagram of a main structure of the upper gastrointestinal tract model as viewed from the front side;
Fig. 6 is a diagram illustrating a main structure of the upper gastrointestinal tract model as viewed from the back side;
Fig. 7 is an exploded view illustrating a main structure of the upper gastrointestinal tract model;
Fig. 8 is a schematic view illustrating a cross-section of the upper gastrointestinal tract model;
Fig. 9 is a diagram schematically illustrating a control configuration of the medical simulator according to the present exemplary embodiment; and
Fig. 10 is a block diagram conceptually illustrating a software configuration achieved by a controller.

### DESCRIPTION OF EMBODIMENTS

Below, exemplary embodiment according to the present invention will be described with reference to the drawings. The exemplary embodiment described below is merely an example, and the the present invention is not limited to the configurations of the exemplary embodiment below.

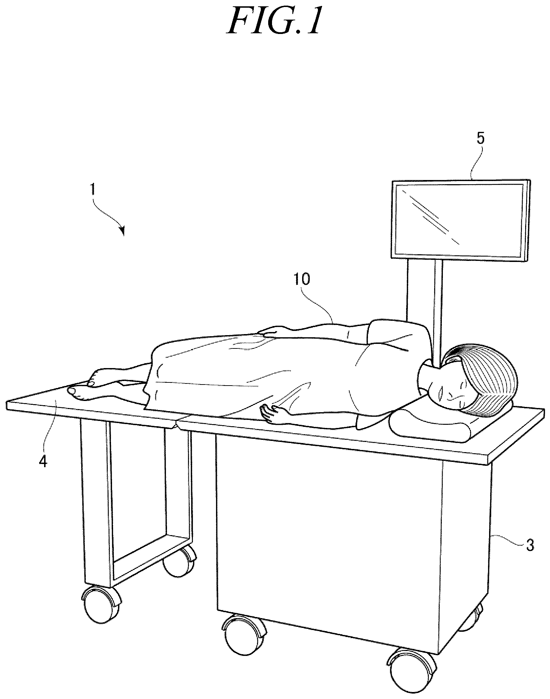

Fig. 1 is a diagram illustrating an external appearance of a medical simulator according to the present exemplary embodiment.

A medical simulator 1 according to the present exemplary embodiment includes a device mounting table 3, an input-output panel 5, a human body model 10, and the like, and allows training of a procedure related to intubation such as nasal-and-oral tracheal intubation, nasal-and-oral endoscopy/endoscopic therapy, or sputum suction.

The following description will be made mainly of a configuration that allows training of a procedure of upper gastrointestinal endoscopy. However, the medical procedure of which training is made possible by the medical simulator 1 includes colonoscopy, small bowel endoscopy, gallbladder endoscopy, pancreatic endoscopy, and a procedure of endoscopic therapy thereof, in addition, a procedure related to other intubations.

The device mounting table 3 is used to place the human body model 10 thereon and also to accommodate, therein, various types of units used to control the human body model 10. Specifically, the device mounting table 3 has a base portion 4 provided on an upper surface thereof and allowing the human body model 10 to be placed thereon. The device mounting table 3 has a configuration in which the base portion 4 is supported from below using leg portions and an accommodating portion. The inside of the accommodating portion, which accommodates various types of units, is shielded. The units accommodated in the device mounting table 3 include a power source for an actuator such as compressor, a simulator controller 80, a gas-pressure controller 7, a speaker 6, and the like. It is desirable that the base portion 4 have a height set so as to be a height of a platform on which a patient lies at the time of performing medical procedures, which are targeted for training, in a medical setting. The height of the base portion 4 may be set so as to be adjustable.

The input-output panel 5 is disposed above the device mounting table 3. The input-output panel 5 includes a display device that displays a training menu, an operating mode of the medical simulator 1, details of operation, evaluation results, and the like. The input-output panel 5 also includes an input device used to operate the screen displayed on the display device. In the example illustrated in Fig. 1, the input-output panel 5 is achieved as a touch panel in which the display device and the input device are integrated.

In the case of the present exemplary embodiment, there is no limitation as to details displayed on the input-output panel 5. For example, in the present exemplary embodiment, the input-output panel 5 displays: a menu for selecting, as a target for training, any one of nasal-and-oral tracheal intubation procedures, nasal-and-oral endoscopic procedures, and a sputum suction procedure; a menu for selecting whether vital reaction corresponding to the selected procedure is necessary; a menu for selecting whether it is under anesthesia; evaluation results; and the like.

The human body model 10 is a human-shape model operated by a person (hereinafter, referred to as a trainee) who receives training. The human body model 10 has a shape that simulates a human-body external shape and internal organs.

In the example illustrated in Fig. 1, the human body model 10 simulates the external shape of the entire human body. In addition, the human body model 10 also simulates, inside thereof, the shapes of the luminal organs of the internal organs including oral cavity, nasal cavity, pharynx, larynx, trachea, esophagus, bronchus, stomach, and duodenum. However, the human body model 10 may only simulate the human-body external shape of the upper body depending on the medical procedure to be trained. In addition, the human body model 10 may simulate, inside thereof, the shapes of other luminal organs including a digestive tract such as colon, small bowel, gallbladder, and bile duct, and also including a urinary tract system such as ureter, urinary bladder, or urethra.

Here, the "human-body external shape" means the shape of the external appearance of a human body. In connection with this "human-body external shape," the shape of the luminal organ such as oral cavity, nasal cavity, pharynx, larynx, trachea, esophagus, bronchus, stomach, and duodenum is referred to as an "organ shape."

The human body model 10 is placed on the base portion 4 in a posture corresponding to the procedure targeted for training. For example, at the time of training of tracheal intubation, the human body model 10 is placed on the base portion 4 in a posture of lying on its back. At the time of training of an endoscopic procedure, the human body model 10 is placed on the base portion 4 in a posture of lying on its side, as illustrated in Fig. 1.

In the following description in connection with the medical simulator 1, the craniocaudal direction, the anteroposterior direction, the left-right direction, the front, the back, and the like are set using the directions used in anatomy of a human body in order to specify the relative positional relationship between individual constituent elements, for the purpose of convenience. Specifically, the direction perpendicular to the frontal plane is referred to as the "anteroposterior direction," the direction perpendicular to the sagittal plane is referred to as the "left-right direction," and the direction perpendicular to the transverse cross section (horizontal plane) is referred to as the "craniocaudal direction." In addition, the anterior side of a human body is referred to as the "forward" or the "front"; the posterior side is referred to as "backward" or the "back"; the lefthand side is referred to as "left"; the right-hand side is referred to as "right"; the superior side is referred to as "up, upward, or above"; and the inferior side is referred to as "down, downward, lower or below."

The directions expressed in this specification do not necessarily match the top or bottom in the gravity direction, and do not limit the modes to which the medical simulator 1 is utilized.

In addition, a surface of the human body that is in direct contact with the outside world may be referred to as the "external body surface," and the surface of the luminal organ may be referred to as the "internal body surface." Furthermore, the inner side from the "external body surface" may be referred to as an "inner side" or "inside," and the side opposite to the lumen of the luminal organ from the "internal body surface" may be referred to as an "inner side" or "inside."

The external body surface of the human body model 10 is covered with a skin sheet that simulates the human-body external shape. A wig is attached to the head.

The skin sheet is formed using a material having flexibility such as silicone rubber.

In the present specification, the term "flexibility" means a property in which it is less likely to break or be damaged even if it is bent, and may have either of or both of stretchability and elasticity.

On the inner side of the skin sheet, the human body model 10 has an inside structure configured with an in-body organ structure and a skeleton base portion. The skeleton base portion is a group of constituent elements that form a framework serving as a base of the shape of the human body model 10, and is formed using materials, such as metal, synthetic resin, or other materials, having strength and hardness that can withstand operations performed by a trainee. The skeleton base portion contains skeleton members corresponding to skull, cervical spine, or the like.

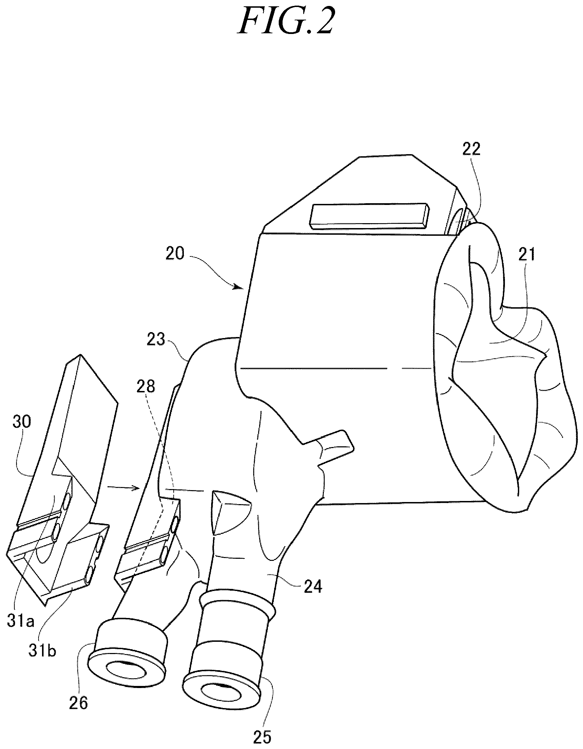

The in-body organ structure is a group of constituent elements having the shapes that simulate luminal organs. Fig. 2 illustrates an in-body forming portion 20 serving as an in-body organ structure.

Fig. 2 is a perspective view illustrating the in-body forming portion 20 as viewed from below.

As illustrated in Fig. 2, the in-body forming portion 20 includes an oral cavity portion 21, a nasal cavity portion 22, a pharynx portion 23, a larynx portion 24, a trachea portion 25, and an esophagus portion 26 that simulate oral cavity, nasal cavity, oral cavity, pharynx, larynx, trachea, and esophagus, respectively. The in-body forming portion 20 is formed integrally using a material having flexibility.

For example, it is possible to scan the in-body organs using computerized tomography (CT), magnetic resonance imaging (MRI), or the like to acquire three-dimensional information on the in-body organs, and make a mold on the basis of the three-dimensional information, thereby forming the in-body forming portion 20 using the mold. Alternatively, it is possible to form the in-body forming portion 20 using a three-dimensional printer. There is no limitation on the method of forming such an in-body forming portion 20.

No limitation is placed on the material having flexibility used to form the in-body forming portion 20, provided that the material is a material having flexibility such as silicone rubber. As with the in-body organs to be simulated, it is preferable that the in-body forming portion 20 have stretchability and elasticity in which, in response to application of pulling force, the shape thereof extends in the application direction, and the shape substantially returns to the original state once the pulling force is removed.

With the in-body forming portion 20 being integrally formed using a material having flexibility as described above, it is possible to eliminate the joining seam and bring the luminal organ reproduced by the in-body forming portion 20 into closer to the actual object, and also possible to achieve real medical simulation.

The in-body forming portion 20 is connected to a pharynx wall plate 30 of the skeleton base portion to be fixed.

The pharynx wall plate 30 is connected to a member (not illustrated) corresponding to a second cervical spine of the skeleton base portion, and is a plate-shaped member extending downward from a point connecting to this member.

The pharynx wall plate 30 has a front surface that supports the pharynx portion 23 of the in-body forming portion 20 from the back surface side of the pharynx portion 23. The pharynx wall plate 30 includes a fitting hole (not illustrated) that penetrates through in the anteroposterior direction (in the thickness direction). The in-body forming portion 20 includes a plate connecting portion (not illustrated) on the back surface thereof. This plate connecting portion is inserted into the fitting hole to connect and fix the pharynx wall plate 30 and the in-body forming portion 20 to each other.

Furthermore, the pharynx wall plate 30 includes side wall portions 31a and 31b that extend toward the front from both end edges in the width direction, the both end edges located in the lower end portion on the front surface.

In a state where the pharynx wall plate 30 and the in-body forming portion 20 are connected to each other, the side wall portions 31a and 31b each have an upper end surface shaped so as to be along the shape of the back surface of a pyriform-sinus formation portion 28 that forms a portion of the in-body forming portion 20 that simulates pyriform sinus. With this configuration, in a state where the pharynx wall plate 30 and the in-body forming portion 20 are connected to each other, the upper end surfaces of the side wall portions 31a and 31b are disposed at corresponding positions that face each other in a state where the upper end surfaces are brought into contact with or close to the back surfaces of corresponding left and right pyriform-sinus formation portions 28.

Furthermore, a pressure sensor (not illustrated) is provided. The pressure sensor is used to detect pressures of a portion of the in-body forming portion 20 that corresponds to the pyriform sinus at the time when this portion is pressed from the internal body surface. For example, this pressure sensor is provided at the upper end surfaces of the side wall portions 31a and 31b or inside of the side wall portions 31a and 31b. However, this pressure sensor may be provided at a back surface side of the pyriform-sinus formation portion 28 of the in-body forming portion 20.

At the time of inserting an endoscope, the endoscope is typically slid from the left pyriform sinus. This method may cause damage if the endoscope is pressed too hard against the left pyriform sinus. In this respect, the pressure sensor detects pressures, which makes it possible to evaluate whether the operation of inserting the endoscope is good or bad in the endoscopic procedure.

For this reason, the pressure sensor may be provided only at the back surface side of the left pyriform-sinus formation portion 28 that forms the left pyriform sinus. In other words, the pressure sensor may be provided only at the side wall portion 31b of the pharynx wall plate 30. However, by providing the pressure sensor at the back surface side of both of the left and right pyriform-sinus formation portions 28, it is possible to determine an operation of sliding the endoscope from the right pyriform sinus side as being an erroneous operation.

In addition, it may be possible to provide a mechanism that allows the side wall portions 31a and 31b to freely slide downward with respect to the pharynx wall plate 30.

### [Upper Gastrointestinal Tract Model]

In addition to the in-body forming portion 20 described above, the human body model 10 further includes, as the in-body organ structure, an upper gastrointestinal tract model 40 that simulates the shapes of esophagus, stomach, and duodenum in order to allow a simulation of an upper gastrointestinal endoscopy. Here, description will be made with focus being placed on a luminal organ model (upper gastrointestinal tract model 40) that allows training of a procedure of upper gastrointestinal endoscopy. However, in order to allow training of a procedure of endoscopy, the human body model 10 may include other luminal organ models of colon, small bowel, or the like, or may have an inside structure that simulates other in-body organs.

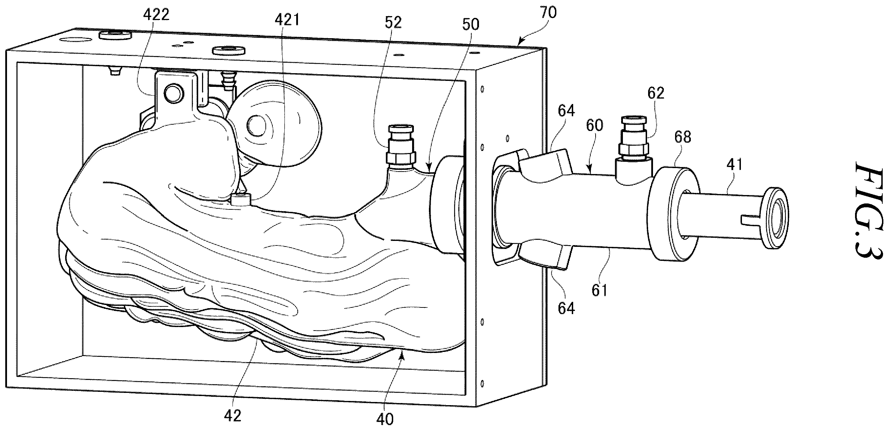

Below, the structure of the upper gastrointestinal tract model 40 and its surroundings will be described with reference to Figs. 3 to 8.

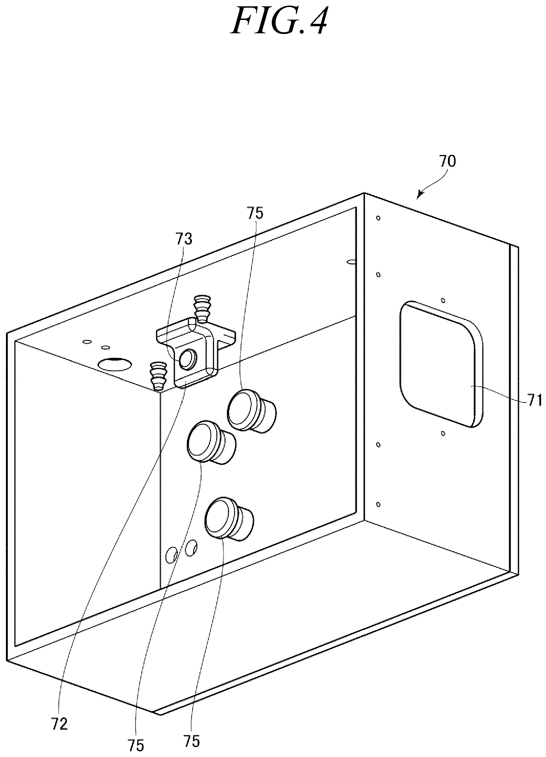

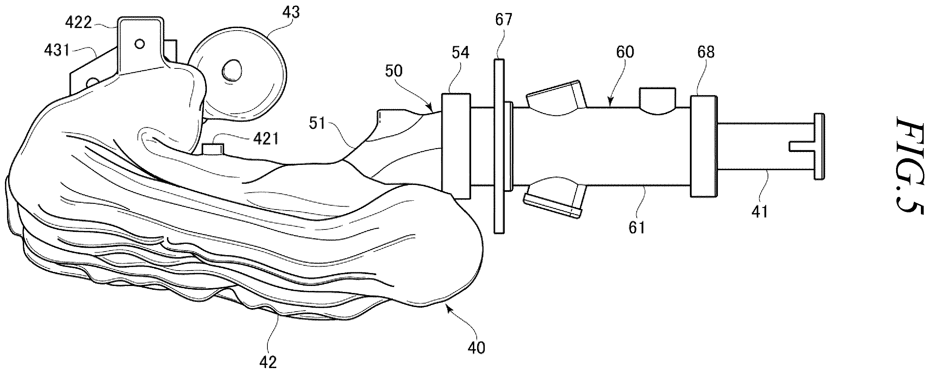

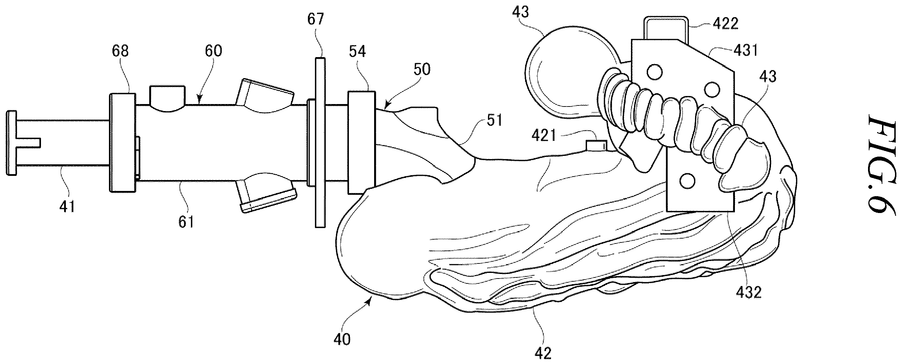

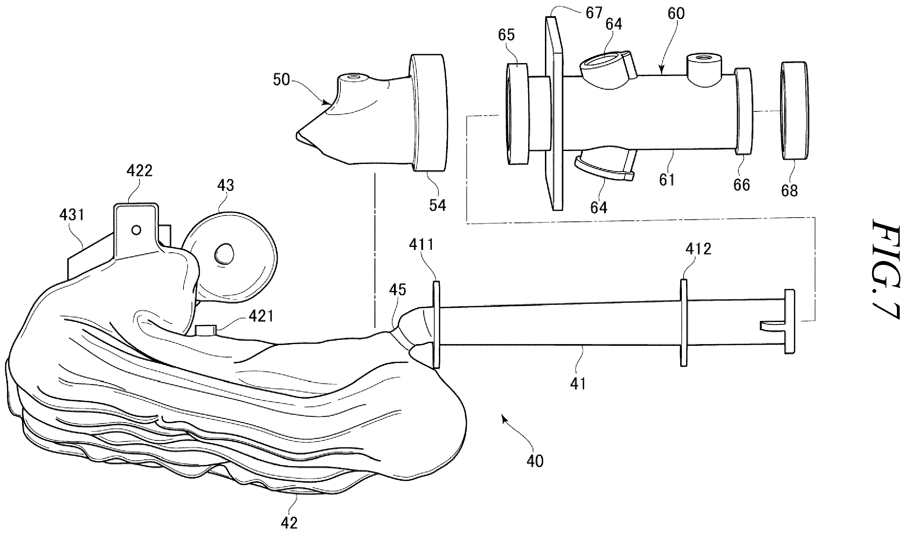

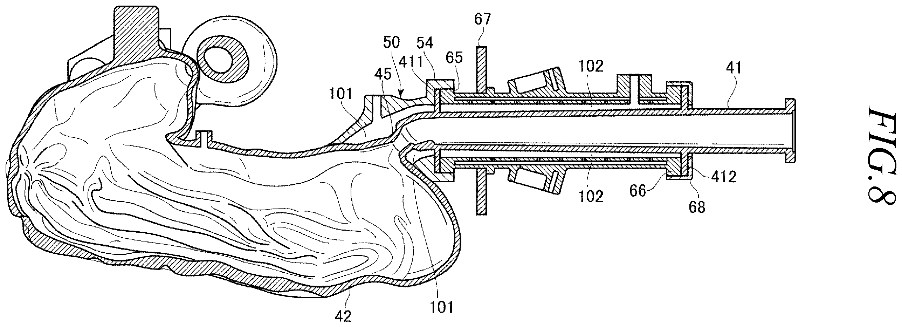

Fig. 3 is a diagram illustrating a main structure of the upper gastrointestinal tract model 40 and its surroundings. Fig. 4 is a diagram illustrating a main structure of an organ accommodating portion 70. Fig. 5 is a diagram of a main structure of the upper gastrointestinal tract model 40 as viewed from the front side. Fig. 6 is a diagram illustrating a main structure of the upper gastrointestinal tract model 40 as viewed from the back surface side. Fig. 7 is an exploded view illustrating a main structure of the upper gastrointestinal tract model 40. Fig. 8 is a schematic view illustrating a cross-section of the upper gastrointestinal tract model 40.

The human body model 10 includes the upper gastrointestinal tract model 40 as illustrated in Fig. 3 as the in-body organ structure. The upper gastrointestinal tract model 40 simulates esophagus, stomach, and duodenum, and hence, the upper gastrointestinal tract model 40 can be referred to as a luminal organ model.

The upper gastrointestinal tract model 40 is formed using materials having flexibility such as a silicone rubber or other materials. The present exemplary embodiment does not limit the material of the upper gastrointestinal tract model 40. However, it is desirable that the upper gastrointestinal tract model 40 is formed so as to have flexibility close to the flexibility of esophagus, stomach, duodenum, or other luminal organs of an actual living body.

The upper gastrointestinal tract model 40 includes an esophagus model 41, a stomach model 42, and a duodenum model 43, each of which is a region that simulates the shape of each of the esophagus, the stomach, and the duodenum. In the present exemplary embodiment, the esophagus model 41, the stomach model 42, and the duodenum model 43 are formed integrally in a seamless manner. This enables the feeling at the time of inserting an endoscope into the lumen of the upper gastrointestinal tract model 40, to be close to the real things. In addition, this makes it possible to simulate a real endoscopic procedure. Note that the esophagus model 41, the stomach model 42, and the duodenum model 43 can be referred to as an esophagus model region, a stomach model region, and a duodenum model region, respectively.

Furthermore, the esophagus model 41 has one end portion connected to the esophagus portion 26 of the in-body forming portion 20 to allow the the upper gastrointestinal tract model 40 to be connected to the in-body forming portion 20. The connection between the esophagus model 41 and the esophagus portion 26 is made such that lumen walls (internal body surfaces) of them smoothly continue with each other without any step or slit.

In the upper gastrointestinal tract model 40, a constricted wall portion 45 is provided at a boundary portion between the esophagus model 41 and the stomach model 42, as illustrated in Fig. 7. The constricted wall portion 45 is a portion where the lumen cross-sectional area of this portion is smaller than that of its surrounding, and is also a portion where the lumen wall (internal body surface) is constricted. In the present exemplary embodiment, the constricted wall portion 45 simulates a cardia as a joining portion between the stomach and the esophagus.

In this specification, the "lumen cross section" of the upper gastrointestinal tract model 40 means a lumen cross section perpendicular to a direction in which food flows through the lumen of the upper gastrointestinal tract model 40, or the longitudinal direction of the upper gastrointestinal tract model 40, or the axial direction thereof. The "lumen cross-sectional area" means an area of the lumen cross section. In addition, a direction parallel to this lumen cross section may be referred to as a lumen cross-sectional direction, and a direction intersecting the lumen cross section at right angles may be referred to as a direction perpendicular to the lumen cross section.

The constricted wall portion 45 can be regarded as being provided at one end portion of the esophagus model 41, and also can be regarded as being provided at one end portion of the stomach model 42.

The esophagus model 41 has a shape that extends in a substantially straight manner from the constricted wall portion 45 toward the direction of the oral cavity. The esophagus model 41 includes flange lid portions 411 and 412 each having flexibility and protruding from the external surface thereof in a circumferential manner.

The flange lid portion 411 is provided at a position where is an end portion of the esophagus model 41 at the side of the stomach model 42 and is slightly toward the oral cavity side from the constricted wall portion 45. The flange lid portion 412 is provided at a position spaced apart from the flange lid portion 411 by a predetermined distance further toward the oral cavity side. The flange lid portions 411 and 412 define an esophagus space 102, which will be described later.

The flange lid portions 411 and 412 may be formed integrally with the upper gastrointestinal tract model 40, or may be formed using the same material as the upper gastrointestinal tract model 40 or using a material having flexibility and differing from the upper gastrointestinal tract model 40, and adhere to the esophagus model 41.

A cardia-space formation portion 50 is provided at an outer periphery of the constricted wall portion 45 of the upper gastrointestinal tract model 40. The cardia-space formation portion 50 forms a sealed space between the the cardia-space formation portion 50 and the constricted wall portion 45. More specifically, the cardia-space formation portion 50 circumferentially covers an outer periphery of a specific region from an end portion of the stomach model 42 to an end portion of the esophagus model 41 with the constricted wall portion 45 of the upper gastrointestinal tract model 40 being disposed between these end portions. The sealed space is formed at the outer periphery of this specific region.

Yet more specifically, in other words, in the present exemplary embodiment, the cardia-space formation portion 50 is a wall member that covers the external surface of the upper gastrointestinal tract model 40 from the external surface of the end portion of the stomach model 42 on the esophagus side to the flange lid portion 411 of the esophagus model 41 in a circumferential manner with an intervening sealed space.

The cardia-space formation portion 50 may be formed separately from the upper gastrointestinal tract model 40, and be adhered to the external surface of the end portion of the stomach model 42 on the esophagus side and the flange lid portion 411 of the esophagus model 41 using an adhesive or the like. Alternatively, the cardia-space formation portion 50 may be formed integrally with the upper gastrointestinal tract model 40. Note that the sectional view in Fig. 8 illustrates an example in which the cardia-space formation portion 50 and the upper gastrointestinal tract model 40 are separately formed.

In addition, the cardia-space formation portion 50 may be formed using the same material as the upper gastrointestinal tract model 40, or may be formed using a material having hardness higher than the upper gastrointestinal tract model 40. However, it is preferable that the cardia-space formation portion 50 be formed using a material having flexibility.

The sealed space defined by the cardia-space formation portion 50 corresponds to a cardia space 101 illustrated in Fig. 8.

The cardia-space formation portion 50 corresponds to a first space formation portion. The cardia space 101 corresponds to a first sealed space.

The cardia-space formation portion 50 includes a tube connecting portion 52.

The tube connecting portion 52 allows an air tube connected to a gas-pressure controller 7, which will be described later, to be connected to the cardia-space formation portion 50, thereby causing the inner space of the air tube and the cardia space 101 to communicate with each other. This enables the simulator controller 80 to control the gas pressure within the cardia space 101 as described later.

An esophagus-space formation portion 60 is further provided at an outer periphery of another region, which is different from the region of the esophagus model 41 that is covered with the cardia-space formation portion 50 described above. The esophagus-space formation portion 60 forms a sealed space defined separately from the cardia space 101. The esophagus-space formation portion 60 circumferentially covers the outer periphery of another region that is different from the region of the esophagus model 41 that is covered with the cardia-space formation portion 50. The esophagus-space formation portion 60 forms the sealed space defined at the outer periphery of said another region separately from the cardia space 101.

In the present exemplary embodiment, the esophagus-space formation portion 60 includes a tubular-shaped portion 61 having an inner space into which the region from the flange lid portion 411 to the flange lid portion 412 of the esophagus model 41 is inserted. As illustrated in Fig. 8, a gap (space) between the wall of the inner space of this tubular-shaped portion 61 and the outer peripheral surface of the esophagus model 41 is closed by the flange lid portions 411 and 412 from both ends in the direction perpendicular to the lumen cross section, whereby the sealed space is formed.

The sealed space formed by the esophagus-space formation portion 60 corresponds to the esophagus space 102 illustrated in Fig. 8.

The esophagus-space formation portion 60 corresponds to the second space formation portion. The esophagus space 102 corresponds to the second sealed space.

The esophagus-space formation portion 60 includes a tube connecting portion 62 and a sensor accommodating portion 64.

The tube connecting portion 62 allows an air tube connected to the gas-pressure controller 7, which will be described later, to be connected to the esophagus-space formation portion 60, thereby causing the inner space of the air tube and the esophagus space 102 to communicate with each other. This enables the simulator controller 80 to control the gas pressure within the esophagus space 102 as described later.

The sensor accommodating portion 64 accommodates, inside thereof, an object detecting sensor used to detect the existence of an endoscope inserted into the lumen of the esophagus model 41. A detected signal obtained by this object detecting sensor is used to control the gas pressure within the esophagus space 102 or the cardia space 101, as described later.

For example, a photoelectric sensor is used as the object detecting sensor accommodated in the sensor accommodating portion 64. However, the specific type of this object detecting sensor is not limited, provided that the sensor can detect the existence of an endoscope that passes through the lumen of the esophagus model 41 from the outside of the esophagus model 41 in the lumen cross-sectional direction.

With the configuration described above in the present exemplary embodiment, it can be said that the cardia space 101 and the esophagus space 102 are provided adjacently to each other with the the cardia space 101 and the esophagus space 102 being separated by the flange lid portion 411 of the esophagus model 41.

As described above, with the member of the flange lid portion 411 of the esophagus model 41, two sealed spaces (the cardia space 101 and the esophagus space 102) can be formed at the outer periphery of the esophagus model 41. This makes it possible to reduce manufacturing cost or development cost.

Furthermore, it is preferable that the tubular-shaped portion 61 of the esophagus-space formation portion 60 have hardness higher than a main portion 51 (main wall member that forms the cardia space 101 and excludes the tube connecting portion 52) of the cardia-space formation portion 50 described above. For example, the tubular-shaped portion 61 of the esophagus-space formation portion 60 is formed using a hard material such as plastic. In addition, the main portion 51 of the cardia-space formation portion 50 is formed using a material such as silicone rubber, etc., the material having hardness lower than the tubular-shaped portion 61.

The tubular-shaped portion 61 of the esophagus-space formation portion 60 passes a portion of the esophagus model 41 thereinto, the portion having a substantially straight shape and being less likely to deform by endoscopy as compared with a portion covered with the cardia-space formation portion 50. Thus, no problem occurs even if the tubular-shaped portion 61 is set to have hardness higher than the cardia-space formation portion 50. Moreover, by setting the esophagus-space formation portion 60 to have hardness higher than the cardia-space formation portion 50, it is possible to increase connection strength between the esophagus-space formation portion 60 and the cardia-space formation portion 50.

The esophagus-space formation portion 60 further includes flange portions 65 and 66 that circumferentially protrude from an outer peripheral surface of the tubular-shaped portion 61. The flange portions 65 and 66 are provided at both end edges of the tubular-shaped portion 61.

The esophagus-space formation portion 60 has one end at the oral cavity side, at which the outer peripheral surface (upper end surface) of the flange portion 66 and the outer peripheral surface (upper end surface) of the flange lid portion 412 of the esophagus model 41 are substantially flush with each other, and a sealing lid 68 that covers both the flange portion 66 and the flange lid portion 412 is attached.

On the other hand, the esophagus-space formation portion 60 has the other end at which the outer peripheral surface (upper end surface) of the flange portion 65 and the outer peripheral surface (upper end surface) of the flange lid portion 411 of the esophagus model 41 are substantially flush with each other. At this other end, the cardia-space formation portion 50 includes a sealing cover portion 54 connected to the flange lid portion 411 and covering the entire circumference of the outer peripheral surface of the flange portion 65 in a close contact state. In the example illustrated in Fig. 8, the cross section of the sealing cover portion 54 (cardia-space formation portion 50) is illustrated such that the sealing cover portion 54 and the upper gastrointestinal tract model 40 are separate members. However, it may be possible that the sealing cover portion 54 is formed integrally with the upper gastrointestinal tract model 40, and the sealing cover portion 54 and the flange lid portion 411 are continuous.

Such a structure makes it possible to reliably achieve sealing while the cardia space 101 and the esophagus space 102 are provided adjacently to each other as separate sealed spaces.

The region of the esophagus model 41 that is covered with the esophagus-space formation portion 60 as described above has a lumen wall surface having a tapered shape having a lumen cross-sectional area that gets gradually narrower toward the constricted wall portion 45 as illustrated in Fig. 8.

With this structure, it is possible to vary the degree of contraction or expansion of the lumen cross-sectional area of the esophagus model 41 according to a portion of the esophagus model 41 by controlling the gas pressure of the esophagus space 102, whereby it is possible to simulate peristaltic movement of the esophagus.

The stomach model 42 of the upper gastrointestinal tract model 40 includes a tube connecting hole 421.

The tube connecting hole 421 penetrates through the lumen (inner space) from the outside of the stomach model 42 to allow the inner space of a liquid delivery tube (not illustrated) and the lumen (inner space) of the stomach model 42 to communicate with each other. A tube connecting portion (not illustrated) to be connected to an end portion of the liquid delivery tube may be attached to the tube connecting hole 421.

The liquid delivery tube is a tube used to deliver a predetermined liquid into the lumen (inner space) of the stomach model 42.

In the present exemplary embodiment, a lubrication liquid that improves slip within the lumen of the stomach model 42 is used as the predetermined liquid. For example, a volatile silicon mold release agent is used.

Here, as an example, the stomach model 42 includes the tube connecting hole 421 used to input such a lubrication liquid from the outside. However, the duodenum model 43 may also include this tube connecting hole, and/or, the esophagus model 41 may also include this tube connecting hole.

By allowing a lubrication liquid such as silicon mold release agent to be input from the outside into the upper gastrointestinal tract model 40 as described above, it is possible to bring the inside of the lumen of the upper gastrointestinal tract model 40 close to a real thing, which makes it possible to reproduce a real feeling at the time of inserting an endoscope. In addition, by using a volatile mold release agent as a lubrication liquid to be input, this agent volatilizes after use if the agent is input only at the time of using it. This makes it possible to reduce maintenance load of the human body model 10.

Furthermore, in the present exemplary embodiment, the tube connecting hole 421 is provided at a position of the stomach model 42 that corresponds to a lesser curve portion of the gastric angle or the body of the stomach.

This enables the lubrication liquid input from the tube connecting hole 421 to be applied to a portion of the inside of the lumen of the stomach model 42 that faces the position where the tube connecting hole 421 is provided, in other words, to be applied to a position of the stomach that corresponds to the greater curve portion of the gastric angle or the body of the stomach. Thus, this portion of the inside of the lumen of the stomach model 42, where an endoscope is more likely to come into contact, can be made smooth with the lubrication liquid, which makes it possible to reproduce a real operational feeling of an endoscope and at the same time, to prevent the stomach model 42 from breaking.

Furthermore, in the stomach model 42, a specific region has hardness higher than other regions, this specific region including a portion corresponding to at least a part of the greater curve portion of the gastric angle or corresponding to at least a part of the greater curve portion of the antrum. For example, the stomach model 42 having different types of hardness depending on corresponding portions as described above can be formed by using silicon having different types of hardness (stiffness) to perform cast molding.

By setting this specific region of the stomach model 42 having flexibility to be harder than other regions as described above, it is possible to reduce the frictional resistance of the inner wall of this specific region as compared with the other regions, which makes it possible to reproduce a real operational feeling at the time of inserting an endoscope. In addition, this also makes it possible to appropriately maintain the shape of the stomach model 42.

Such a part of the upper gastrointestinal tract model 40 is accommodated in the organ accommodating portion 70.

In the present exemplary embodiment, the organ accommodating portion 70 is a rectangular-shaped box. The organ accommodating portion 70 accommodates, within the inside space thereof, a part of the upper gastrointestinal tract model 40, and also retains the upper gastrointestinal tract model 40 so that the upper gastrointestinal tract model 40 is shaped and is disposed so as to be analogous to the luminal organ simulated by the upper gastrointestinal tract model 40.

As illustrated in Fig. 4, the organ accommodating portion 70 includes an accommodation opening portion 71 that penetrates through from the inside space toward the outside space, and also includes a stomach retaining portion 72 and duodenum stopping portions 75, each of which protrudes toward the direction of the inside space.

The accommodation opening portion 71 is provided in an upper wall (wall on the head side) of the organ accommodating portion 70. The stomach retaining portion 72 is provided in an inner surface of the right wall (wall on the right side of a human body) of the organ accommodating portion 70. The duodenum stopping portions 75 is provided in an inner surface of the back wall (wall on the backward side) of the organ accommodating portion 70.

In the present exemplary embodiment, training of a procedure of the upper gastrointestinal endoscopy is performed in a state where the human body model 10 lies on its left side on the base portion 4 as illustrated in Fig. 1, as in clinical time. Thus, the stomach retaining portion 72 is in a state of being provided at the inner surface of an upper wall in the gravity direction.

The shape of the organ accommodating portion 70 is not limited to examples of shapes illustrated in Figs. 3 and 4. The organ accommodating portion 70 may have other shapes such as rounded-corner cuboid, cylinder, or spherical shape, provided that the organ accommodating portion 70 can accommodate, inside thereof, a part of the esophagus model 41, and also can retain the upper gastrointestinal tract model 40.

The esophagus model 41 and the esophagus-space formation portion 60 that covers the esophagus model 41 are retained by the organ accommodating portion 70 in a state of being inserted into the accommodation opening portion 71 of the organ accommodating portion 70.

A fix flange portion 67 is further provided so as to be fixed to the tubular-shaped portion 61 of the esophagus-space formation portion 60 at a position closer to the center than the flange portion 65. The fix flange portion 67 is fixed to the wall surface, where the accommodation opening portion 71 is provided, in a state of blocking the accommodation opening portion 71 from the inside space of the organ accommodating portion 70.

The stomach model 42 further includes a protruding piece 422 that protrudes toward the outward at a position of the external surface of the stomach model 42 that corresponds to the antrum of the stomach. The protruding piece 422 also has flexibility as with the stomach model 42, and is formed integrally with the stomach model 42.

This protruding piece 422 is connected to the stomach retaining portion 72 to position the stomach model 42 within the inside space of the organ accommodating portion 70. Specifically, the protruding piece 422 includes a through hole made in the thickness direction. The stomach stopping portion 73 provided in a protruding manner in the wall surface of the stomach retaining portion 72 is inserted into this through hole to connect the protruding piece 422 and the stomach retaining portion 72 to each other, whereby the organ accommodating portion 70 retains the stomach model 42.

The duodenum model 43 is provided adjacently to the stomach model 42 through the pylorus.

As illustrated in Fig. 6, the duodenum model 43 includes a first plate 431 and a second plate 432 at an external surface of a region located farther than the duodenal bulb. The first plate 431 and the second plate 432 extend outwardly from both sides with the duodenum model 43 being disposed between the first plate 431 and the second plate 432.

The first plate 431 and the second plate 432 engage with the duodenum stopping portions 75 of the organ accommodating portion 70, whereby the duodenum model 43 is retained by the organ accommodating portion 70 at the inside space thereof. In the present exemplary embodiment, the first plate 431 includes two through holes that penetrate through in the thickness direction. The second plate 432 includes a through hole that penetrates through in the thickness direction. Three duodenum stopping portions 75 are inserted correspondingly into these three through holes, whereby the first plate 431 and the second plate 432 engage with the duodenum stopping portions 75.

As described above, in the present exemplary embodiment, the stomach model 42 is retained within the inside space of the organ accommodating portion 70 only with the protruding piece 422 provided at a position corresponding to the antrum of the stomach. On the other hand, the duodenum model 43 is retained within the inside space of the organ accommodating portion 70 with the first plate 431 and the second plate 432 provided farther than the duodenal bulb.

In other words, it can be said that, within the inside space of the organ accommodating portion 70, the stomach model 42 has connecting points to the organ accommodating portion 70, and the connecting points are less in number than the duodenum model 43.

This realistically reproduces a fact that, in a living body, the duodenum, which is one of the retroperitoneum organs, is fixed whereas the stomach is more movable than the duodenum.

Furthermore, in a state where the human body model 10 lies on the base portion 4 on its left side, the stomach retaining portion 72 connected to the protruding piece 422 of the stomach model 42 is in a state of being provided at the inner surface of the upper wall in the gravity direction as described above. This brings the stomach model 42 into a state of being hung at a position corresponding to the antrum of the stomach, and its shape is maintained by the specific region formed so as to have high hardness. As described above, the stomach model 42 succeeds in realistically reproducing the shape or the like of the stomach in a state where a human body lies on its left side.

In addition, the stomach model 42 is retained with the protruding piece 422 in a state of being able to move. This allows the stomach model 42 to move in response to operation of an endoscope and to return to its original position after the operation.

Although Fig. 3 or the like does not illustrate the configuration farther than the duodenum model 43, the distal end of the duodenum model 43 is provided with a through hole. An air tube may be attached to this through hole. In addition, an exhaust may be provided at this air tube. This configuration allows gas to rapidly come out using this exhaust in a case where the gas pressure within the lumen of the stomach model 42 and the duodenum model 43 excessively rise, which makes it possible to prevent the stomach model 42 and the duodenum model 43 from breaking or being damaged.

### [Control Configuration]

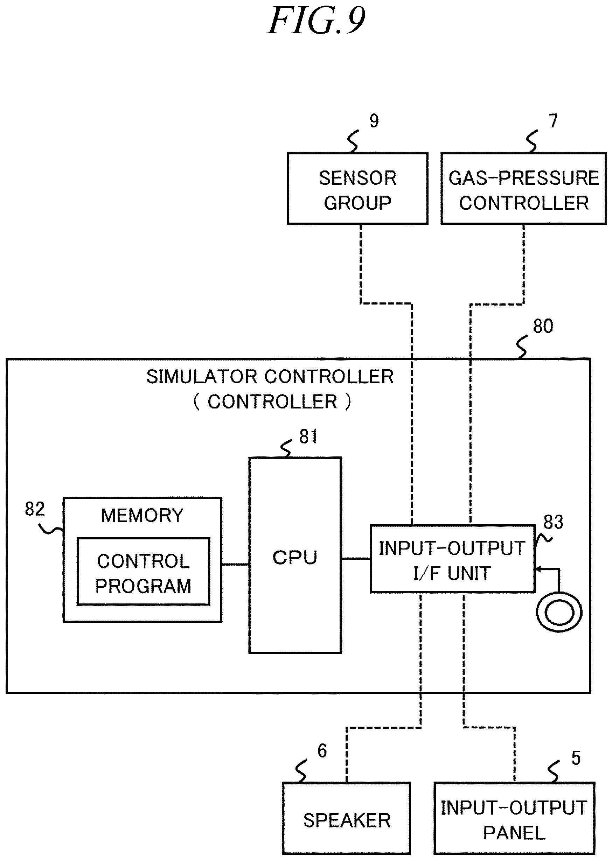

Next, a control configuration of the medical simulator 1 will be described with reference to Fig. 9.

Fig. 9 is a diagram schematically illustrating a control configuration of the medical simulator 1 according to the present exemplary embodiment.

As illustrated in Fig. 9, the medical simulator 1 includes, for example, the input-output panel 5, the speaker 6, the gas-pressure controller 7, the sensor group 9, the simulator controller (hereinafter, simply referred to as a controller) 80. However, as an example, Fig. 9 illustrates the control configuration used for training related to an upper gastrointestinal endoscopy procedure. The medical simulator 1 may include an actuator, a power source or other control configurations that are not illustrated in Fig. 9 and cause each portion of the human body model 10 to operate.

The controller 80 includes, for example, a central processing unit (CPU) 81, a memory 82, and an input-output interface (I/F) unit 83 as hardware configurations.

The CPU 81 may be one or more general CPUs or micro processing units (MPU). In place of this or in addition to this, the CPU 81 may be an application-specific integrated circuit (ASIC), a digital signal processor (DSP), a graphics processing unit (GPU), a field programmable gate array (FPGA), or the like.

The memory 82 may be a random access memory (RAM) and a read only memory (ROM), and may include an auxiliary storage device (hard disk or the like).

The input-output I/F unit 83 is a unit that controls input or output of a signal that should be processed by the CPU 81 or a signal that has been processed by the CPU 81, and is coupled to the input-output panel 5 or other user interface units, the speaker 6, the gas-pressure controller 7, the sensor group 9, and the like. In addition, the input-output I/F unit 83 may include a communication unit that performs communication with other computers or units, and also can be coupled to a movable recording medium or the like.

The controller 80 may include a hardware element that is not illustrated in Fig. 9, and no limitation is placed on the hardware configuration of the controller 80.

The gas-pressure controller 7 communicates with the cardia space 101 and the esophagus space 102 through the air tube. The operation of the gas-pressure controller 7 is controlled by the controller 80. The gas-pressure controller 7 reduces or increases gas pressures within the cardia space 101 and the esophagus space 102. It is only necessary that the gas-pressure controller 7 can individually vary gas pressures within the cardia space 101 and the esophagus space 102, each of which is a sealed space. There is no limitation on the specific configuration of the gas-pressure controller 7. The gas-pressure controller 7 includes, for example, a compressor that outputs compressed air, an ejector device that has a function of switching between negative pressure and positive pressure, a valve, and the like. In addition, the gas-pressure controller 7 may include an air pump that can draw or discharge gas.

The sensor group 9 includes various types of plural sensors provided inside of or outside of the human body model 10, and detects a state of an endoscopic procedure at each position. In the present exemplary embodiment, the sensor group 9 includes, for example: an object detecting sensor provided at the esophageal orifice, the lower esophagus (sensor accommodating portion 64), and the duodenum model 43 (not illustrated); a pressure sensor provided at a position of the stomach model 42 that corresponds to the greater curve portion of the stomach and also provided at the pharynx portion 23; and a gas-pressure sensor that detects the gas pressure within the lumen (inner space) of the stomach model 42.

With the CPU 81 executing a control program stored in the memory 82, the controller 80 receives an input signal from the sensor group 9 while performing control of the gas-pressure controller 7, control of outputting audio from the speaker 6, and the like.

This control program may be stored in advance at the time of shipping, or may be installed through the input-output I/F unit 83 from a movable recording medium such as a compact disc (CD) or a memory card or from other computers on a network to be stored in the memory 82.

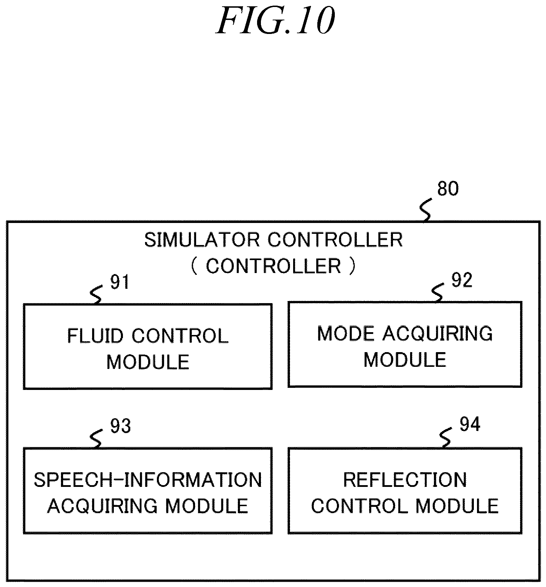

Fig. 10 is a block diagram conceptually illustrating a software configuration achieved by the controller 80.

With the CPU 81 executing a control program stored in the memory 82, the controller 80 achieves a software configuration as illustrated in Fig. 10. Specifically, the controller 80 includes, for example, a fluid control module 91, a mode acquiring module 92, a speech-information acquiring module 93, and a reflection control module 94 as software configuration.

However, individual software constituent elements illustrated in Fig. 10 are separated in a conceptual manner for the purpose of explanation. Thus, the software configuration achieved by the controller 80 may not be clearly separated into individual constituent elements as illustrated in Fig. 10.

The fluid control module 91 gives the gas-pressure controller 7 an instruction to individually control gas pressures within the cardia space 101 and the esophagus space 102, each of which communicates with the gas-pressure controller 7 through the air tube. For example, in order to achieve a predetermined pressure, the fluid control module 91 sends an instruction signal corresponding to this pressure to the gas-pressure controller 7. This predetermined pressure includes the atmospheric pressure, a first stage pressure lower than the atmospheric pressure, a second stage pressure further lower than the first stage pressure, and the like.

The mode acquiring module 92 acquires training mode information in which training of a procedure of a nasal endoscope or training of a procedure of an oral endoscope is designated. For example, the mode acquiring module 92 receives, through the input-output I/F unit 83, a signal from the input-output panel 5. This makes it possible to acquire, as the training mode information, whether the training of the procedure of a nasal endoscope is designated through operation performed to the input-output panel 5 or the training of the procedure of an oral endoscope is designated.

The speech-information acquiring module 93 acquires speech information on a trainee. For example, the speech-information acquiring module 93 receives, through the input-output I/F unit 83, an audio signal obtained from a microphone (not illustrated) to apply audio recognition processing to this audio signal, thereby determining whether this audio signal indicates an utterance set in advance.

Specifically, during upper gastrointestinal endoscopy, a doctor says "please breath in" or the like for the purpose of closing the cardia in order to check whether there is a tumor or the like in the cardia. In addition, in order to insert an endoscope from the cardia to the stomach, the doctor says "please relax" to make the cardia loosened. Thus, the speech-information acquiring module 93 determines whether the received audio signal indicates an utterance set in advance such as "please breath in" or "please relax."

In a case where the audio signal is determined to indicate the utterance set in advance, the speech-information acquiring module 93 identifies the speech information.

However, the speech-information acquiring module 93 may hold various options for utterance that causes the cardia to close or utterance that causes the cardia to be loosened. The audio recognition processing is regarded as a process using various types of existing recognition methods.

The reflection control module 94 can output a groan (for example, a voice of "wooh") indicating an agony state to the speaker 6, or cause the speaker 6 to output a nausea sound on the basis of detected signals from pressure sensors provided at the pharynx portion 23 and at the position of the stomach model 42 that corresponds to the greater curve portion of the stomach.

Specifically, the reflection control module 94 reads out the groan audio data stored in advance in the memory 82 in a case where the detected pressure value exceeds a predetermined value based on the detected signal from the pressure sensor provided at the position of the stomach model 42 that corresponds to the greater curve portion of the stomach. The reflection control module 94 plays the read-out audio data, thereby causing the speaker 6 to output the groan sound.

Furthermore, the reflection control module 94 reads out the audio data on the nausea sound stored in advance in the memory 82 in a case where both of the pressure values exceed a predetermined value based on each of the detected signals from the pressure sensor provided at the pharynx portion 23 and the pressure sensor provided at the position of the stomach model 42 that corresponds to the greater curve portion of the stomach. The reflection control module 94 plays the read-out audio data, thereby causing the speaker 6 to output the nausea sound.

As described above, the nausea sound is caused to be outputted only in a case where both of the stomach model 42 and the pharynx portion 23 detect that pressures exceed a predetermined value. This makes it possible to prevent the trainee from feeling annoyed due to continual output of the nausea sound.

At the time of outputting groan sound or at the time of outputting nausea sound, the reflection control module 94 may further activate an actuator, which makes it possible to move the skeleton of the human body model 10.

Below, details of specific processing of the controller 80 will be described. However, details of the description below are merely an example. Thus, the controller 80 may implement other processes.

The controller 80 (fluid control module 91) can individually control gas pressures within the cardia space 101 and the esophagus space 102 using control of the gas-pressure controller 7. With this configuration, by varying the gas pressure within the cardia space 101, it is possible to expand or contract the lumen cross-sectional area of the constricted wall portion 45, in other words, the size (area) of the cardia. In addition, by varying the gas pressure within the esophagus space 102, it is possible to expand or contract the lumen cross-sectional area of the region of the esophagus model 41 that is covered with the esophagus space 102.

The cardia is closed by the lower esophageal sphincter to prevent contents within the stomach from backing up into the esophagus. In addition, the esophagus performs peristaltic movement to deliver food into the stomach.

With the present exemplary embodiment, it is possible to simulate the open and close of the cardia and the peristaltic movement of the esophagus using control of the gas-pressure controller 7 by the controller 80 (fluid control module 91). This makes it possible to realistically reproduce behavior of the esophagus and the cardia, which allows highly precise training of a medical procedure.

### (Control of Size of Cardia)

Here, a nasal endoscope and an oral endoscope differ by approximately two times in terms of the diameter of an insertion portion in cross section perpendicular to the longitudinal direction. For example, in a case of a certain product line-up, the cross-sectional diameter of an oral endoscope is 10.8 mm, and the cross-sectional diameter of a nasal endoscope is 5.6 mm

Thus, in a case where the size (lumen cross-sectional area of the constricted wall portion 45) of a cardia simulated by the upper gastrointestinal tract model 40 is set so as to correspond to the diameter of a nasal endoscope, unnatural feeling of resistance occurs at the time of passing an oral endoscope through the cardia, which does not achieve highly precise training.

Thus, in a case of the present exemplary embodiment, the fluid control module 91 controls the gas pressure within the cardia space 101 to expand or contract the lumen cross-sectional area of the constricted wall portion 45, on the basis of whether an oral endoscope or a nasal endoscope is designated in the training mode information acquired by the mode acquiring module 92. Specifically, in a case where the acquired training mode information indicates an oral endoscope, the fluid control module 91 controls the gas pressure within the cardia space 101 to expand the lumen cross-sectional area of the constricted wall portion 45 so as to match the cross-sectional area of the oral endoscope. In a case where the acquired training mode information indicates a nasal endoscope, the fluid control module 91 controls the gas pressure within the cardia space 101 to cause the lumen cross-sectional area of the constricted wall portion 45 to contract so as to match the cross-sectional area of the nasal endoscope.

In the present exemplary embodiment, the constricted wall portion 45 is formed such that the lumen cross-sectional area of the constricted wall portion 45 matches the cross-sectional area of a nasal endoscope under atmospheric pressure (in a normal state). Thus, in a case where the training mode information indicates an oral endoscope, the fluid control module 91 causes the inside of the cardia space 101 to be at a negative pressure to match the lumen cross-sectional area of the constricted wall portion 45 to the cross-sectional area of the oral endoscope. In a case where the training mode information indicates a nasal endoscope, the the fluid control module 91 returns the inside of the cardia space 101 to the atmospheric gas pressure to cause the lumen cross-sectional area of the constricted wall portion 45 to match the cross-sectional area of the nasal endoscope.

This allows highly precise training close to clinical occasion in both cases of the nasal endoscopic procedure and the oral endoscopic procedure.

Here, in a case where the lumen cross-sectional area of the constricted wall portion 45 is caused to match each of the cross-sectional areas of the nasal endoscope and the oral endoscope, it is preferable that the lumen cross-sectional area of the constricted wall portion 45 be slightly smaller than the cross-sectional area of the endoscope. This makes it possible to close the cardia with the endoscope in a state where the endoscope is inserted into the stomach without causing an odd feeling at the time of inserting the endoscope. This allows training for a procedure involving an air delivering function and a suction function of the endoscope in a state close to clinical settings.

In addition, by controlling the lumen cross-sectional area of the constricted wall portion 45, it is possible to reproduce the lower esophageal sphincter being loosened or state of esophageal hiatal hernia or the like.

### (Reproduction of Peristaltic Movement of Esophagus)

Furthermore, until the object detecting sensor accommodated in the sensor accommodating portion 64 detects an endoscope, the fluid control module 91 increases or decreases the gas pressure within the esophagus space 102 at predetermined cycles to repeat expansion and contraction of the lumen cross-sectional area of the esophagus model 41. In addition, upon detection of an endoscope by the object detecting sensor, the fluid control module 91 returns the gas pressure within the esophagus space 102 to the atmospheric pressure.

This makes it possible to reproduce peristaltic movement of the esophagus when the endoscope passes through the esophagus, which allows realistic training. In addition, after the endoscope has passed through the esophagus, it is possible to suppress unnecessary movement by stopping the peristaltic movement of the esophagus.

Here, for example, the predetermined cycle at which the gas pressure within the esophagus space 102 increase or decrease may be set to a constant cycle set in advance such as two-second cycle, or may be set to a cycle (for example, 2.3 seconds ±0.3 second) slightly varying so as to match a breathing cycle of a human.

### (Reproduction of Behavior of Cardia)

Furthermore, on the basis of speech information acquired by the speech-information acquiring module 93, the fluid control module 91 controls the gas pressure within the cardia space 101 to expand or contract the lumen cross-sectional area of the constricted wall portion 45. Specifically, in a case where the speech information indicates contents of an utterance such as "please breath in," the fluid control module 91 reduces the gas pressure within the cardia space 101 to contract the lumen cross-sectional area of the constricted wall portion 45. In a case where the speech information indicates contents of an utterance such as "please relax," the the fluid control module 91 increases the gas pressure (for example, to the atmospheric pressure) within the cardia space 101 to expand the lumen cross-sectional area of the constricted wall portion 45.

This makes it possible to realistically reproduce behavior of the cardia that corresponds to speech to a patient at the time of upper gastrointestinal endoscopy, which allows highly precise training.

### (Reproduction of Eructation)

Furthermore, on the basis of information on the gas pressure within the lumen of the stomach model 42 detected by the gas-pressure sensor, the fluid control module 91 controls the gas pressure within the cardia space 101 to expand the lumen cross-sectional area of the constricted wall portion 45, thereby simulating eructation. Specifically, in a case where the gas pressure within the lumen of the stomach model 42 exceed a predetermined pressure, the fluid control module 91 causes the inside of the cardia space 101 to be at a negative pressure to expand the lumen cross-sectional area of the constricted wall portion 45. This makes it possible to quickly discharge the air within the lumen of the stomach model 42, which had been sealed due to the cardia being closed by the endoscope, from the cardia to the esophagus side, thereby simulating eructation.

### [Modification Example]

The exemplary embodiment described above is merely an example of the medical simulator 1. The medical simulator 1 is not limited to the configuration described above It is only necessary that the medical simulator 1 has at least a part of the configuration described above, and the medical simulator 1 may be modified partially on an as-necessary basis.

For example, in the exemplary embodiment described above, the upper gastrointestinal tract model 40 having the shape that simulates the esophagus, the stomach, and the duodenum is given as an example of the luminal organ model. However, a luminal organ model having a shape that only simulates the esophagus and the stomach may be provided.

In addition, a luminal organ model having a shape that simulates the colon may be provided. In this case, a constricted wall portion having a lumen cross-sectional area smaller than that of its surroundings is provided at one end of the colon. This constricted wall portion makes it possible to simulate the anus. In addition, as with that described above, one sealed space is formed at the outer periphery of the one end of the colon, and another sealed space is formed at the outer periphery of the other region of the colon. With this configuration, it is possible to simulate peristaltic movement of the colon and open-close behavior of the anus.

Similarly, it may be possible to provide a luminal organ model that simulates two or more of the ureter, the urinary bladder, and the urethra. In this case, it is only necessary that a constricted wall portion having a lumen cross-sectional area smaller than that of its surroundings is provided at somewhere of these portions.

In addition, with the fluid control within the sealed space at the outer periphery of the luminal organ, it is possible to not only simulate the peristaltic movement of the luminal organ and the open-close behavior but also simulate behavior of pulsation or the like.

Furthermore, the exemplary embodiment described above controls the gas pressures (air pressures) within the cardia space 101 serving as the first sealed space and within the esophagus space 102 serving as the second sealed space. In other words, the to-be-controlled fluid is air, and its gas pressures are controlled to expand or contract the lumen cross-sectional area of the luminal organ model.

However, the to-be-controlled fluid may be a gas other than air or may be a liquid. The cardia space 101 and the esophagus space 102 may be filled with such a fluid, and pressures of this fluid may be controlled.

Furthermore, two sealed spaces (the cardia space 101 and the esophagus space 102) are formed at the outer periphery of the esophagus model 41. However, it may be possible to form three or more sealed spaces at the outer periphery of the luminal organ model that corresponds to one luminal organ, and fluid pressures within the individual sealed spaces may be controlled individually. This makes it possible to more realistically reproduce, for example, peristaltic movement of the esophagus.

Furthermore, in the exemplary embodiment described above, the organ accommodating portion 70 is provided to accommodate a part of the upper gastrointestinal tract model 40 and also to retain the upper gastrointestinal tract model 40. However, the inside space of the organ accommodating portion 70 may be set to be a sealed space, and the fluid pressure (gas pressure) within this inside space may be controlled. This makes it possible to reproduce behavior of the stomach model 42. In addition, it may be possible to employ a configuration in which the stomach model 42 has flexibility and wall thickness set so as to produce a flattened state due to its own weight under the atmospheric pressure, and fluid pressures within the inside space of the organ accommodating portion 70 are reduced to maintain the shape of the stomach model 42.

Furthermore, in the exemplary embodiment described above, a cushioning member (for example, a foaming plastic member) from which the external shape of the stomach model 42 and the duodenum model 43 is cut out may be disposed within the inside space of the organ accommodating portion 70. With this configuration, it is possible to prevent the stomach model 42 or the duodenum model 43 from hitting against the inner wall of the organ accommodating portion 70 due to operation of an endoscope. This eliminates the odd feeling associated with endoscopic operation, and also makes it possible to prevent the stomach model 42 or the duodenum model 43 from being damaged.

In an actual endoscopic procedure, at the time of pulling an endoscope out from the duodenum, the insertion portion and a curved portion of the endoscope are made straight as much as possible. In a case where this method is taken, there is a possibility that friction against the inner wall of the lumen of the stomach model 42 makes it difficult to pull the endoscope out.

In this respect, the stomach model 42 may include a protruding piece extending up to the external surface of the cardia-space formation portion 50 from an external surface of a position of the lesser curve portion of the gastric body that is located closer to the cardia, and may also include an actuator that pull a wire to pull the protruding piece in a right direction (a direction toward the right wall of the organ accommodating portion 70, the right wall including the stomach retaining portion 72).

In addition, in a case where the object detecting sensor included in the duodenum model 43 detects an endoscope, the controller 80 activates the actuator to pull the wire, whereby it is possible to draw the lesser curve portion of the gastric body of the stomach model 42 in the right direction. This operation allows a portion of the stomach model 42 from the pylorus to the cardia to be straight. This makes it possible to pull the endoscope out without any unnatural feeling of resistance even in a case where the endoscope is made straight.

Furthermore, a mechanism that allows the lumen cross-sectional area of the esophagus portion 26 to contract may be further provided at a position of the esophagus portion 26 that corresponds to the esophageal orifice, the the esophagus portion 26 being simulated in the in-body forming portion 20. This mechanism may be achieved with control of fluid pressures within the sealed space as described above, or may be achieved with a configuration in which an actuator pulls a wire. In the latter case, for example, such a configuration can be added to the pharynx wall plate 30. In this case, the controller 80 may control the mechanism as described above such that: the lumen cross-sectional area of the esophagus portion 26 that corresponds to the esophageal orifice is caused to contract in a case where the endoscope is inserted; and in a case of reproducing eructation, the inside of the cardia space 101 is caused to be at a negative pressure to expand the lumen cross-sectional area of the constricted wall portion 45 and also to expand the lumen cross-sectional area at a position of the esophagus portion 26 that corresponds to the esophageal orifice.

Details of each of the exemplary embodiments and the modification examples described above may also be identified in the following manner.

### (Supplemental Note 1)

A medical simulator comprising:
a luminal organ model having flexibility and having a shape that simulates at least one luminal organ,
   the luminal organ model including a constricted wall portion having a lumen cross-sectional area smaller than the lumen cross-sectional area of a periphery of the constricted wall portion,
   the constricted wall portion being provided in a first specific region of the luminal organ model, the first specific region including a portion corresponding to one end portion of one luminal organ or corresponding to a joining portion of two luminal organs;
a first space formation portion that circumferentially covers at least an outer periphery of the first specific region of the luminal organ model to form a first sealed space at the outer periphery of the first specific region; and
a fluid controller that controls a fluid pressure of a to-be-controlled fluid within the first sealed space to expand or contract the lumen cross-sectional area of the constricted wall portion of the luminal organ model.

### (Supplemental Note 2)

The medical simulator according to (Supplemental Note 1), further comprising:
a second space formation portion that circumferentially covers an outer periphery of a second specific region to form a second sealed space at the outer periphery of the second specific region,
   the second specific region being a part of a region of the luminal organ model other than the specific region,
   the second sealed space being separate from the first sealed space, wherein
the fluid controller can individually control a fluid pressure of the to-be-controlled fluid within the first sealed space and a fluid pressure of the to-be-controlled fluid within the second sealed space to individually vary the lumen cross-sectional area of the constricted wall portion of the luminal organ model and a lumen cross-sectional area of the second specific region.

### (Supplemental Note 3)

The medical simulator according to (Supplemental Note 2), wherein
the second space formation portion includes a tubular-shaped portion having an inner space into which the second specific region of the luminal organ model is inserted, and
a main portion of the first space formation portion has hardness lower than the tubular-shaped portion of the second space formation portion.

### (Supplemental Note 4)

The medical simulator according to (Supplemental Note 3), wherein
the luminal organ model includes a flange lid portion that has flexibility and circumferentially protrudes from an external surface of the luminal organ model, and
the first sealed space and the second sealed space are provided adjacently to each other through the flange lid portion.

### (Supplemental Note 5)

The medical simulator according to (Supplemental Note 4), wherein
the second space formation portion further includes a flange portion that circumferentially protrudes from an outer peripheral surface of the tubular-shaped portion, the flange portion being provided at one end edge of the tubular-shaped portion, and
the first space formation portion is connected to the flange lid portion of the luminal organ model, and covers an entire circumference of an outer peripheral surface of the flange portion of the second space formation portion in a close contact state.

### (Supplemental Note 6)

The medical simulator according to any one of (Supplemental Note 1) to (Supplemental Note 5) further comprising:
a liquid delivery tube provided to deliver a predetermined liquid into a lumen of the luminal organ model, wherein
the luminal organ model further includes a tube connecting hole that allows an inner space of the liquid delivery tube and the lumen of the luminal organ model to communicate with each other.

### (Supplemental Note 7)

The medical simulator according to (Supplemental Note 6), wherein
the luminal organ model includes a stomach model region that simulates a shape of a stomach,
the constricted wall portion of the luminal organ model simulates a cardia, and
the tube connecting hole of the luminal organ model is provided at a position of the stomach model region of the luminal organ model, the position corresponding to a lesser curve portion of the stomach.

### (Supplemental Note 8)

The medical simulator according to any one of (Supplemental Note 1) to (Supplemental Note 7) further comprising:
a gas pressure sensor configured to be able to detect a gas pressure within the lumen of the luminal organ model, wherein
the luminal organ model includes a stomach model region that simulates a shape of a stomach,
the constricted wall portion of the luminal organ model simulates a cardia,
the gas pressure sensor detects a gas pressure within the lumen of the stomach model region, and
the fluid controller controls a fluid pressure of the to-be-controlled fluid within the first sealed space on a basis of a gas pressure within the lumen of the stomach model region, the gas pressure being detected by the gas pressure sensor, to expand the lumen cross-sectional area of the constricted wall portion of the luminal organ model, thereby simulating eructation.

### (Supplemental Note 9)

The medical simulator according to any one of (Supplemental Note 2) to (Supplemental Note 5) further comprising:
an accommodating portion that accommodates, within an inside space thereof, at least a part of the luminal organ model, wherein
the luminal organ model further includes an esophagus model region that simulates a shape of at least a part of an esophagus, and also includes a stomach model region that continues from the esophagus model region and simulates a shape of a stomach,
the first specific region includes a joining portion between the esophagus model region and the stomach model region,
the second specific region is a part of the esophagus model region,
the accommodating portion includes a through hole that penetrates through from the inside space toward an outside space and into which the first space formation portion or the second space formation portion is inserted, and also includes an organ retaining portion that protrudes toward a direction of the inside space,
the luminal organ model further includes a protruding portion that protrudes toward an outward from an external surface of the stomach model region, the protruding portion being connected to the organ retaining portion, and
the protruding portion is connected to the organ retaining portion to position the stomach model region of the luminal organ model within the inside space of the accommodating portion.

### (Supplemental Note 10)

The medical simulator according to (Supplemental Note 9), wherein
the luminal organ model further includes a duodenum model region that continues from the stomach model region and simulates a shape of a duodenum,
the accommodating portion accommodates, within the inside space thereof, at least the stomach model region and the duodenum model region of the luminal organ model, and
the stomach model region and the duodenum model region of the luminal organ model have, within the inside space of the accommodating portion, one or more connecting points to the accommodating portion, the connecting points of the stomach model region are less, in number, than the connecting points of the duodenum model region.

### (Supplemental Note 11)

The medical simulator according to (Supplemental Note 9) or (Supplemental Note 10), wherein
the stomach model region of the luminal organ model has a stomach model specific region including a portion corresponding to at least a part of a greater curve portion of a gastric angle or corresponding to at least a part of a greater curve portion of an antrum, the stomach model specific region having hardness higher than the hardness of another region of the stomach model region.

### (Supplemental Note 12)

The medical simulator according to any one of (Supplemental Note 9) to (Supplemental Note 11), wherein
the second specific region of the luminal organ model has a tapered lumen wall surface having a lumen cross-sectional area that gets gradually narrower toward the first specific region.

### (Supplemental Note 13)

The medical simulator according to any one of (Supplemental Note 1) to (Supplemental Note 12) further comprising:
a mode acquiring means that acquires training mode information in which training of a procedure of a nasal endoscope or training of a procedure of an oral endoscope is designated, wherein
the fluid controller controls a fluid pressure of a to-be-controlled fluid within the first sealed space to expand or contract the lumen cross-sectional area of the constricted wall portion of the luminal organ model, on a basis of whether an oral endoscope or a nasal endoscope is designated in the acquired training mode information.

### (Supplemental Note 14)

The medical simulator according to any one of (Supplemental Note 1) to (Supplemental Note 13) further comprising:
a speech-information acquiring means that acquires speech information on a trainee, wherein
the fluid controller controls a fluid pressure of a to-be-controlled fluid within the first sealed space to expand or contract the lumen cross-sectional area of the constricted wall portion of the luminal organ model, on a basis of the acquired speech information.

## Claims

1. A medical simulator comprising:
a luminal organ model having flexibility and having a shape that simulates at least one luminal organ,
the luminal organ model including a constricted wall portion having a lumen cross-sectional area smaller than the lumen cross-sectional area of a periphery of the constricted wall portion,
the constricted wall portion being provided in a first specific region of the luminal organ model, the first specific region including a portion corresponding to one end portion of one luminal organ or corresponding to a joining portion of two luminal organs;
a first space formation portion that circumferentially covers at least an outer periphery of the first specific region of the luminal organ model to form a first sealed space at the outer periphery of the first specific region; and
a fluid controller that controls a fluid pressure of a to-be-controlled fluid within the first sealed space to expand or contract the lumen cross-sectional area of the constricted wall portion of the luminal organ model.

2. The medical simulator according to claim 1, further comprising:
a second space formation portion that circumferentially covers an outer periphery of a second specific region to form a second sealed space at the outer periphery of the second specific region,
the second specific region being a part of a region of the luminal organ model other than the specific region,
the second sealed space being separate from the first sealed space, wherein
the fluid controller can individually control a fluid pressure of the to-be-controlled fluid within the first sealed space and a fluid pressure of the to-be-controlled fluid within the second sealed space to individually vary the lumen cross-sectional area of the constricted wall portion of the luminal organ model and a lumen cross-sectional area of the second specific region.

3. The medical simulator according to claim 2, wherein
the second space formation portion includes a tubular-shaped portion having an inner space into which the second specific region of the luminal organ model is inserted, and
a main portion of the first space formation portion has hardness lower than the tubular-shaped portion of the second space formation portion.

4. The medical simulator according to claim 3, wherein
the luminal organ model includes a flange lid portion that has flexibility and circumferentially protrudes from an external surface of the luminal organ model, and
the first sealed space and the second sealed space are provided adjacently to each other through the flange lid portion.

5. The medical simulator according to claim 4, wherein
the second space formation portion further includes a flange portion that circumferentially protrudes from an outer peripheral surface of the tubular-shaped portion, the flange portion being provided at one end edge of the tubular-shaped portion, and
the first space formation portion is connected to the flange lid portion of the luminal organ model, and covers an entire circumference of an outer peripheral surface of the flange portion of the second space formation portion in a close contact state.

6. The medical simulator according to any one of claims 1 to 5 further comprising:
a liquid delivery tube provided to deliver a predetermined liquid into a lumen of the luminal organ model, wherein
the luminal organ model further includes a tube connecting hole that allows an inner space of the liquid delivery tube and the lumen of the luminal organ model to communicate with each other.

7. The medical simulator according to claim 6, wherein
the luminal organ model includes a stomach model region that simulates a shape of a stomach,
the constricted wall portion of the luminal organ model simulates a cardia, and
the tube connecting hole of the luminal organ model is provided at a position of the stomach model region of the luminal organ model, the position corresponding to a lesser curve portion of the stomach.

8. The medical simulator according to any one of claims 1 to 7 further comprising:
a gas pressure sensor configured to be able to detect a gas pressure within the lumen of the luminal organ model, wherein
the luminal organ model includes a stomach model region that simulates a shape of a stomach,
the constricted wall portion of the luminal organ model simulates a cardia,
the gas pressure sensor detects a gas pressure within the lumen of the stomach model region, and
the fluid controller controls a fluid pressure of the to-be-controlled fluid within the first sealed space on a basis of a gas pressure within the lumen of the stomach model region, the gas pressure being detected by the gas pressure sensor, to expand the lumen cross-sectional area of the constricted wall portion of the luminal organ model, thereby simulating eructation.

9. The medical simulator according to any one of claims 2 to 5 further comprising:
an accommodating portion that accommodates, within an inside space thereof, at least a part of the luminal organ model, wherein
the luminal organ model further includes an esophagus model region that simulates a shape of at least a part of an esophagus, and also includes a stomach model region that continues from the esophagus model region and simulates a shape of a stomach,
the first specific region includes a joining portion between the esophagus model region and the stomach model region,
the second specific region is a part of the esophagus model region,
the accommodating portion includes a through hole that penetrates through from the inside space toward an outside space and into which the first space formation portion or the second space formation portion is inserted, and also includes an organ retaining portion that protrudes toward a direction of the inside space,
the luminal organ model further includes a protruding portion that protrudes toward an outward from an external surface of the stomach model region, the protruding portion being connected to the organ retaining portion, and
the protruding portion is connected to the organ retaining portion to position the stomach model region of the luminal organ model within the inside space of the accommodating portion.

10. The medical simulator according to claim 9, wherein
the luminal organ model further includes a duodenum model region that continues from the stomach model region and simulates a shape of a duodenum,
the accommodating portion accommodates, within the inside space thereof, at least the stomach model region and the duodenum model region of the luminal organ model, and
the stomach model region and the duodenum model region of the luminal organ model have, within the inside space of the accommodating portion, one or more connecting points to the accommodating portion, the connecting points of the stomach model region are less, in number, than the connecting points of the duodenum model region.

11. The medical simulator according to claim 9 or 10, wherein
the stomach model region of the luminal organ model has a stomach model specific region including a portion corresponding to at least a part of a greater curve portion of a gastric angle or corresponding to at least a part of a greater curve portion of an antrum, the stomach model specific region having hardness higher than the hardness of another region of the stomach model region.

12. The medical simulator according to any one of claims 9 to 11, wherein
the second specific region of the luminal organ model has a tapered lumen wall surface having a lumen cross-sectional area that gets gradually narrower toward the first specific region.

13. The medical simulator according to any one of claims 1 to 12 further comprising:
a mode acquiring means that acquires training mode information in which training of a procedure of a nasal endoscope or training of a procedure of an oral endoscope is designated, wherein
the fluid controller controls a fluid pressure of a to-be-controlled fluid within the first sealed space to expand or contract the lumen cross-sectional area of the constricted wall portion of the luminal organ model, on a basis of whether an oral endoscope or a nasal endoscope is designated in the acquired training mode information.

14. The medical simulator according to any one of claims 1 to 13 further comprising:
a speech-information acquiring means that acquires speech information on a trainee, wherein
the fluid controller controls a fluid pressure of a to-be-controlled fluid within the first sealed space to expand or contract the lumen cross-sectional area of the constricted wall portion of the luminal organ model, on a basis of the acquired speech information.
